# FASCICULE DE BREVET EUROPEEN

(11) **EP 0 368 978 B1**
(45) Date de publication et mention de la délivrance du brevet: **21.04.1993**
(21) Numéro de dépôt: 89906142.8
(22) Date de dépôt: 18.05.1989
(51) Int. Cl.: B01D 53/14

(54) **PROCEDE ET DISPOSITIF POUR L'ELIMINATION DE H2S**
VERFAHREN UND VORRICHTUNG ZUR ENTFERNUNG VON H2S
PROCESS AND DEVICE FOR REMOVAL OF H2S

(30) Priorité: 20.05.1988 FR 8806797
(43) Date de publication de la demande: 23.05.1990
(73) Titulaire: ELF AQUITAINE PRODUCTION, 92400 Courbevoie (FR)
(72) Inventeur: ELGUE, Jean, F-64140 Billère (FR); TOURNIER-LASSERVE, Jacques, F-64000 Pau (FR)
(74) Mandataire: Boillot, Marc
(86) Numéro de dépôt international: FR8900240
(87) Numéro de publication internationale: WO8911326

(56) Documents cités:
- EP-A- 0 013 049
- FR-A- 2 101 724
- FR-A- 2 449 470

## Description

L'invention a pour objet un procédé pour l'élimination de l'H₂S présent à faible concentration dans un gaz qui renferme également une quantité importante de vapeur d'eau. Elle se rapporte encore à un dispositif pour la mise en oeuvre de ce procédé.

On rencontre fréquemment dans l'industrie des gaz contenant de l'H₂S à faible concentration, à savoir en concentration allant de 10 volumes par million à 10 % en volume, et renfermant en outre une quantité de vapeur d'eau allant de 5 à 60 % en volume. C'est le cas notamment de certains gaz résiduaires et notamment des gaz résiduaires d'usine à soufre qui ont été soumis à un traitement d'hydrogénation et d'hydrolyse pour amener tous les composés du soufre qu'ils renfermant sous l'unique forme d'H₂S, ou encore de gaz synthétiques qui sont obtenus, par exemple, par hydrogénation ou craquage de produits carbonés tels que charbon, bois ou encore résidus pétroliers.

De tels gaz sont généralement soumis à un traitement d'élimination de l'H₂S qu'ils renferment soit, lorsqu'il s'agit de gaz de synthèse, pour éviter que ce composé vienne perturber les réactions de synthèse auxquelles ces gaz doivent participer, soit, dans le cas de gaz résiduaires, pour amener ces gaz aux normes imposées par la législation en matière de pollution atmosphérique avant leur rejet à l'atmosphère.

Dans un procédé connu (FR-A-2101724), qui est utilisé pour le traitement de gaz résiduaires issus d'une usine à soufre CLAUS et qui comprend tout d'abord une étape d'hydrogénation et d'hydrolyse des composés soufrés autres que H₂S contenus dans lesdits gaz résiduaires pour amener ces composés soufrés sous l'unique forme d'H₂S, le courant gazeux résultant de ladite étape d'hydrogénation et d'hydrolyse, qui possède une teneur en H₂S inférieure à 5 % en volume et une concentration en vapeur d'eau de l'ordre de 30 % en volume, est refroidi à une température inférieure au point de rosée de l'eau qu'il contient pour condenser la quasi-totalité de cette eau. Le courant gazeux exempt d'eau est ensuite lavé, à contre courant en opérant à une température inférieure à 50°C, au moyen d'un solvant régénérable fixant l'H₂S, par exemple une solution aqueuse d'une alcanolamine secondaire ou tertiaire, puis le courant gazeux lavé est soumis à une incinération, pour transformer en SO₂ les dernières traces d'H₂S qu'il peut encore contenir, et rejeté ensuite à l'atmosphère.

Dans un tel procédé, l'eau condensée au cours de l'étape de refroidissement du courant gazeux hydrogéné est une eau acide saturée en H₂S, qui doit subir un traitement spécifique de purification pour pouvoir être réutilisée dans le procédé ou rejetée comme eau résiduaire, un tel traitement étant complexe et par là même onéreux du fait notamment des volumes d'eau importants à traiter.

Pour éviter les inconvénients dus à la condensation de l'eau, la citation FR-A - 2 425 886 propose de supprimer cette condensation en maintenant en permanence la température du courant gazeux en tous points de l'installation à une valeur supérieure au point de rosée de l'eau contenue dans ledit courant gazeux.

En opérant ainsi, il est nécessaire que la mise en contact du courant gazeux hydrogéné avec le solvant régénérable soit réalisée à des températures plus élevées, à savoir entre 65°C et 85°C, et en outre la totalité de la vapeur d'eau est présente dans le courant gazeux au cours de cette mise en contact. Ces conditions de fonctionnement conduisent à l'utilisation d'un débit de solvant nettement plus important, à savoir environ trois fois plus, pour obtenir le même degré d'élimination de l'H₂S.

Dans le procédé de la citation FR-A-2 449 470, on maintient l'étape de condensation de l'eau contenue dans le courant gazeux à traiter issu de l'hydrogénation, avant la mise en contact dudit courant gazeux avec le solvant régénérable, mais on injecte l'eau condensée dans le circuit dudit solvant et l'on ajuste la température de ce solvant à une valeur appropriée de l'ordre de 70°C, lors de son injection dans la zone de mise en contact avec le courant gazeux renfermant H₂S, pour équilibrer le bilan global en eau de ladite zone de manière à éviter tout rejet d'eau liquide.

Dans une telle forme de mise en oeuvre, les débits de solvant régénérable à utiliser pour obtenir le degré désiré d'élimination de l'H₂S sont comparables à ceux que l'on doit employer dans le procédé de la citation FR-A-2 425 886.

L'invention propose un procédé d'élimination de l'H₂S présent à faible concentration, à savoir 10 v.p.m. (volumes par million) à environ 10 % en volume, dans un gaz renfermant également 5 à 60 % en volume de vapeur d'eau et éventuellement d'autres gaz tels que CO₂. Un tel procédé comporte, comme le procédé de la citation FR-A - 2 101 724, une séparation par condensation de l'eau contenue dans le gaz à traiter, puis une mise en contact du gaz à traiter débarrassé de son eau avec un solvant régénérable fixant l'H₂S, mais il ne nécessite aucun traitement de purification de l'eau condensée et permet donc de s'affranchir des inconvénients liés à un tel traitement. En outre, le procédé selon l'invention permet également d'éviter les débits importants de circulation de solvant qui sont nécessaires dans les variantes décrites dans les citations FR-A - 2 425 886 et 2 449 470 pour obtenir une élimination comparable de l'H₂S.

Le procédé selon l'invention est du type dans lequel on refroidit le gaz à traiter à une température inférieure à la température de rosée de l'eau qu'il contient de manière à séparer dudit gaz par condensation la quasi-totalité de son eau et on lave le gaz refroidi, débarrassé de son eau, avec un liquide absorbant fixant l'H₂S et régénérable, la température régnant dans la zone de lavage étant inférieure à la température de rosée de l'eau du gaz à traiter et sensiblement égale à celle du liquide absorbant introduit dans ladite zone, pour former un liquide absorbant chargé d'H₂S, qui est régénéré et réutilisé, et un gaz épuré substantiellement exempt d'eau et d'H₂S, et il se caractérise en ce que l'on met en contact ledit gaz épuré avec une quantité suffisante d'eau, qui renferme l'eau produite lors du refroidissement du gaz a traiter et éventuellement d'autres eaux résiduaires et qui est portée à une température appropriée supérieure à celle du gaz épuré, de manière à produire un gaz épuré réhydraté ayant une température telle que la quantité d'eau qu'il renferme corresponde à un débit massique d'eau substantiellement égal au débit massique de l'eau présente dans le gaz à traiter, avant refroidissement de ce dernier, et des eaux résiduaires éventuellement rajoutées et en ce que l'eau servant à réhydrater le gaz épuré circule en circuit fermé, ledit circuit étant alimenté par l'eau condensée produite lors du refroidissement du gaz à traiter et éventuellement par des eaux résiduaires d'autres provenances et cédant de l'eau au gaz épuré lors de la réhydratation de ce dernier.

Le procédé selon l'invention permet de traiter des gaz divers, qui renferment H₂S en faible concentration, à savoir 10 v.p.m. à environ 10 % en volume et plus particulièrement 50 v.p.m. à environ 6 % en volume, ainsi qu'une quantité de vapeur d'eau allant de 5 à 60 % en volume et plus particulièrement de 10 à 50 % en volume, lesdits gaz pouvant renfermer également d'autres composés acides tels que CO2. Les gaz à traiter peuvent consister notamment en certains gaz naturels, en gaz synthétiques produits, par exemple, par hydrogénation ou craquage de produits carbonés tels que charbon, bois ou résidus pétroliers, ou bien encore en gaz résiduaires. Ledit procédé s'applique tout particulièrement au traitement de gaz résiduaires d'usines à soufre fonctionnant suivant le procédé CLAUS, après que lesdits gaz résiduaires aient subi un traitement d'hydrogénation et d'hydrolyse pour amener tous les composés du soufre qu'ils renferment sous l'unique forme d'H₂S, le dit traitement d'hydrogénation et d'hydrolyse étant réalisé comme décrit, par exemple, dans le brevet francais FR-B-2 589 141 du 25 octobre 1985. La température du gaz à traiter peut aller, par exemple, de 30°C environ à 150°C environ, tandis que sa pression, qui est généralement celle à laquelle ce gaz est disponible, peut aller de la pression atmosphérique à 50 bars environ.

Comme indiqué plus haut, la température de l'eau dudit circuit est ajustée en amont de la zone de réhydratation, c'est-à-dire de la zone de mise en contact de l'eau avec le gaz épuré à réhydrater, à une valeur supérieure à celle dudit gaz et suffisante pour que le gaz épuré réhydraté, à sa sortie de la zone de réhydratation, contienne une quantité d'eau correspondant à un débit massique d'eau substantiellement égal au débit massique de l'eau présente dans le gaz à traiter, avant refroidissement de ce dernier, et des eaux résiduaires éventuellement rajoutées.

Le refroidissement du gaz à traiter en-dessous de la température de rosée de l'eau qu'il contient peut être réalisé de toute manière connue. On peut en particulier effectuer ce refroidissement par échange de chaleur direct ou indirect avec l'eau du circuit de réhydratation du gaz épuré, à sa sortie de la zone de réhydratation et après l'avoir refroidie à la température appropriée.

Le liquide absorbant utilisé dans l'étape de lavage pour fixer l'H₂S présent dans le gaz refroidi et substantiellement débarrassé de son eau, peut être choisi parmi les divers liquides absorbant l'H₂S qui sont régénérables, notamment par chauffage. Le liquide absorbant peut être à base d'un ou plusieurs solvants à action physique tels que méthanol, diméthyléther de polyéthylène glycols, N-méthylpyrrolidone, sulfolane, esters phosphoriques, ou bien consister en un solvant à action chimique formé par une solution aqueuse d'un ou plusieurs composés fixant les gaz acides tels que H₂S sous la forme de complexes ou de sels instables thermiquement, comme par exemple une solution aqueuse d'une ou plusieurs alcanolamines telles que méthyldiéthanolamine, triéthanolamine, diisopropanolamine, monoéthanolamine, diéthanolamine, diglycolamine et amines stériquement encombrées. Le liquide absorbant peut être également choisi parmi les mélanges des deux types de solvant précités comme par exemple les mélanges d'eau, de diisopropanolamine et de sulfolane, les mélanges d'eau, de méthyldiéthanolamine et de sulfolane et les mélanges d'eau, de méthanol et d'une ou plusieurs amines telles que méthyldiéthanolamine, monoéthanolamine, diéthanolamine et diisopropanolamine. Lorsque le gaz à traiter renferme, en plus de l'H₂S, d'autres gaz acides et notamment CO₂, le liquide absorbant est de préférence choisi parmi ceux des liquides absorbants tels que précités qui absorbent sélectivement l'H₂S. Convient tout spécialement comme liquide absorbant sélectif de l'H₂S et régénérable par chauffage, une solution aqueuse d'une alcanolamine choisie notamment parmi la méthyldiéthanolamine, la triéthanolamine et la diisopropanolamine ou d'une amine choisie parmi certaines amines stériquement encombrées, la concentration en alcanolamine ou en amine encombrée de cette solution étant par exemple comprise entre 1N et 8N et se situant de préférence entre 3N et 6N.

Le lavage du gaz refroidi par le liquide absorbant est réalisé dans une zone de lavage, dans laquelle, de préférence, le gaz à laver et le liquide absorbant circulent à contre-courant.

La pression régnant dans la zone de lavage correspond sensiblement à celle du gaz à laver injecté dans ladite zone. La température à choisir pour réaliser le lavage, qui dépend entre autres de la nature du liquide absorbant utilisé pour fixer l'H₂S, se situe en-dessous de la température de rosée de l'eau du gaz à traiter. Généralement cette température de lavage est inférieure à 70°C et, lorsque le liquide absorbant est choisi parmi les solutions aqueuses d'alcanolamines, elle est avantageusement comprise entre 5°C et 55°C. La température régnant dans la zone de lavage correspond sensiblement à celle du liquide absorbant introduit dans ladite zone.

La régénération du liquide absorbant chargé d'H₂S peut s'effectuer par détente, par stripage par un gaz inerte et/ou par chauffage selon la nature du liquide absorbant. Les conditions opératoires pour la mise en oeuvre de la technique de régénération choisie étant celles préconisées dans l'art pour la technique considérée.

Un dispositif pour la mise en oeuvre du procédé selon l'invention comporte un système de refroidissement du gaz à traiter, qui est pourvu d'un conduit d'amenée du gaz à traiter et qui présente en outre une sortie pour les gaz et une sortie pour les liquides, une colonne de lavage, qui présente en tête une sortie pour les gaz, dans sa partie supérieure une entrée pour le liquide absorbant régénéré et dans sa partie inférieure une sortie pour le liquide absorbant chargé et une entrée pour les gaz, cette dernière étant reliée à la sortie pour les gaz du système de refroidissement, et une colonne de régénération, qui présente en tête une sortie pour un courant gazeux acide, en fond une sortie pour le liquide absorbant régénéré, cette sortie étant reliée par un conduit à l'entrée pour le liquide absorbant de la colonne de lavage, et dans sa partie supérieure une entrée pour le liquide absorbant chargé, ladite entrée étant reliée par un conduit à la sortie correspondante de la colonne de lavage, et il se caractérise en ce qu'il comporte en outre d'une part une colonne de réhydratation, qui présente en tête une sortie pour les gaz, dans sa partie supérieure une entrée pour les liquides et dans sa partie inférieure une sortie pour les liquides et une entrée pour les gaz, cette entrée étant en communication avec la sortie pour les gaz de la colonne de lavage, et d'autre part un circuit d'eau de réhydratation ayant une extrémité connectée à la sortie pour les liquides de la colonne de réhydratation et une autre extrémité reliée à l'entrée pour les liquides de cette colonne, ledit circuit étant associé au système de refroidissement de telle sorte que, d'une part, l'eau condensée par le refroidissement du gaz à traiter passe, par la sortie pour les liquides du système de refroidissement, dans l'extrémité du circuit de réhydratation reliée à l'entrée (14) pour les liquides de la colonne (4) de réhydratation et que, d'autre part, l'eau de réhydratation de ce circuit soit réchauffée par échange de chaleur direct ou indirect avec le gaz à traiter, le circuit d'eau de réhydratation étant également pourvu de moyens pour assurer la circulation et le refroidissement de l'eau qu'il contient, ces moyens étant disposés entre la sortie de la colonne de réhydratation et le système de refroidissement, et éventuellement de moyens d'introduction d'eaux résiduaires.

Selon un forme de réalisation, le système de refroidissement du gaz à traiter comporte un échangeur indirect de chaleur et un ballon de condensation présentant une entrée et pourvue d'une sortie pour les gaz et d'une sortie pour les liquides, lesdites sorties constituant respectivement les sorties pour les gaz et pour les liquides du système de refroidissement, l'un des circuits de l'échangeur indirect de chaleur faisant partie du circuit d'eau de réhydratation tandis que l'autre circuit dudit échangeur relie le conduit d'amenée du gaz à traiter à l'entrée du ballon de condensation.

Selon une autre forme de réalisation le système de refroidissement consiste en une colonne de refroidissement, qui est pourvue, dans sa partie supérieure, d'une sortie pour les gaz et d'une entrée pour les liquides et, dans sa partie inférieure, du conduit d'amenée du gaz à traiter et d'une sortie pour les liquides, lesdites sorties pour les gaz et pour les liquides constituant respectivement les sorties pour les gaz et pour les liquides du système de refroidissement, ladite colonne de refroidissement étant montée sur le circuit d'eau de réhydratation par ses entrée et sortie pour les liquides. Dans une variante de cette forme de réalisation, la colonne de refroidissement est équipée d'un appareil d'échange indirect de chaleur comportant une entrée et une sortie et dont l'entrée constitue l'entrée pour les liquides de ladite colonne de refroidissement, ledit appareil étant monté par ses entrée et sortie sur le circuit d'eau de réhydratation.

Les colonnes de refroidissement et de réhydratation peuvent constituer également deux sections superposées et indépendantes d'une même colonne, à savoir une section de refroidissement surmontée d'une section de réhydratation, la section de refroidissement pouvant présenter l'une ou l'autre des structures définies ci-dessus pour la colonne de refroidissement.

Dans une autre forme de réalisation , les colonnes de refroidissement, de lavage et de réhydratation forment trois sections superposées d'une même colonne, a savoir une section inférieure de refroidissement, une section intermédiaire de lavage et une section supérieure de réhydratation, de telle sorte que la sortie pour les gaz d'une section coincide avec l'entrée pour les gaz de la section située immédiatement au-dessus, la section de refroidissement présentant l'une ou l'autre des structures définies ci-dessus pour la colonne de refroidissement et étant connectée au circuit d'eau de réhydratation comme indiqué pour ladite colonne.

Les colonnes ou sections du dispositif selon l'invention dans lesquelles est réalisé un contact direct gaz/liquide sont généralement pourvues de plateaux ou d'un garnissage de tout type connu destinés à améliorer le contact gaz/liquide. Le nombre de plateaux ou la hauteur de garnissage de la colonne ou section considérée est choisi pour qu'en fonctionnement ladite colonne ou section ait les performances désirées.

D'autres caractéristiques et avantages apparaîtront à la lecture de la description des formes de mise en oeuvre du procédé selon l'invention donnée ci-après en référence aux figures du dessin annexé, sur lequel :
- les figures 1 et 2 représentent deux variantes d'un premier dispositif selon l'invention comportant, dans une même colonne, les sections de refroidissement, de lavage et de réhydratation;
- les figures 3 et 4 montrent deux variantes d'un second dispositif selon l'invention comportant, dans une même colonne, les sections de refroidissement et de réhydratation et dans une colonne séparée la section de lavage; et
- la figure 5 représente un troisième dispositif selon l'invention comportant trois ensembles séparés pour le refroidissement, le lavage et la réhydratation.

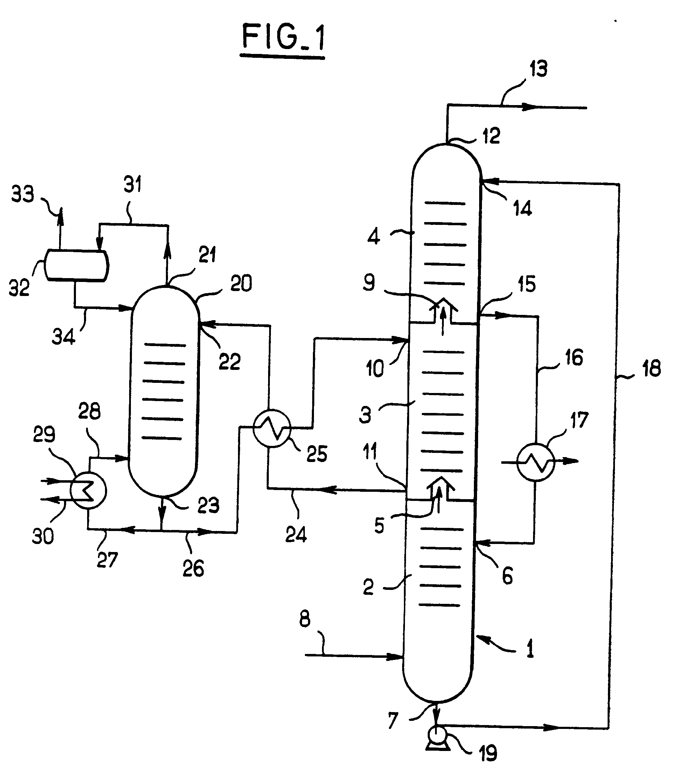

Le dispositif représenté sur la figure 1 comporte une colonne 1 divisée en trois sections, à savoir une section inférieure 2 de refroidissement, une section intermédiaire 3 de lavage et une section supérieure 4 de réhydratation, chacune desdites sections étant pourvue de plateaux de contact gaz/liquide. La section 2 de refroidissement communique avec la section 3 de lavage par un passage 5 pour les gaz, ledit passage constituant la sortie pour les gaz en tête de la section de refroidissement et en même temps l'entrée pour les gaz en fond de la section de lavage, et la section 3 de lavage communique avec la section 4 de réhydratation par un passage 9 pour les gaz, ledit passage constituant à la fois la sortie pour les gaz en tête de la zone de lavage et l'entrée pour les gaz située dans la partie inférieure de la section de réhydratation. La section 2 de refroidissement comporte encore dans sa partie supérieure une entrée 6 pour les liquides et en fond une sortie 7 pour les liquides et en outre dans la partie inférieure de ladite section débouche un conduit 8 d'amenée du gaz à traiter. La section 3 de lavage comporte également dans sa partie supérieure une entrée 10 pour le liquide absorbant régénéré et dans sa partie inférieure une sortie 11 pour le liquide absorbant chargé. La section 4 de réhydratation présente en tête une sortie 12 pour les gaz, prolongée par un conduit 13 d'évacuation de gaz, dans sa partie supérieure une entrée 14 pour les liquides et dans sa partie inférieure une sortie 15 pour les liquides. La section 2 de refroidissement est montée par ses entrée 6 et sortie 7 pour les liquides, sur un circuit d'eau de réhydratation, qui comporte, d'une part, un conduit 16 pourvu d'un échangeur indirect de chaleur 17 et connectant la sortie 15 pour les liquides de la section de réhydratation à l'entrée 6 pour les liquides de la section de refroidissement et, d'autre part, un conduit 18 connectant la sortie 7 pour les liquides de la section de refroidissement à l'entrée 14 pour les liquides de la section de réhydratation. Le conduit 18 est muni d'une pompe 19, dont le refoulement est dirigé vers l'entrée 14 de la section de réhydratation. Une colonne de régénération 20, associée à la section 3 de lavage, comporte en tête une sortie 21 pour un gaz acide, dans sa partie supérieure une entrée 22 pour l'absorbant à régénérer et en fond une sortie 23 pour l'absorbant régénéré. L'entrée 22 de la colonne de régénération est reliée à la sortie 11 de la section de lavage par un conduit 24, sur lequel est monté le circuit froid d'un échangeur indirect de chaleur 25. La sortie 23 de la colonne de régénération est reliée à l'entrée 10 de la section de lavage par un conduit 26 sur lequel est monté le circuit chaud de l'échangeur de chaleur 25. Dans sa partie inférieure la colonne de régénération est en outre connectée, par des tubulures d'entrée 27 et de sortie 28, à un rebouilleur 29 chauffé par échange indirect de chaleur au moyen de vapeur d'eau circulant dans une tubulure 30. En outre la sortie 21 de la colonne de régénération est connectée par une tubulure 31 à un condenseur 32, qui est muni, à sa partie supérieure, d'un conduit 33 d'évacuation de gaz acide et dont la partie inférieure est reliée à la partie supérieure de la colonne de régénération par un conduit 34 assurant le retour des condensats.

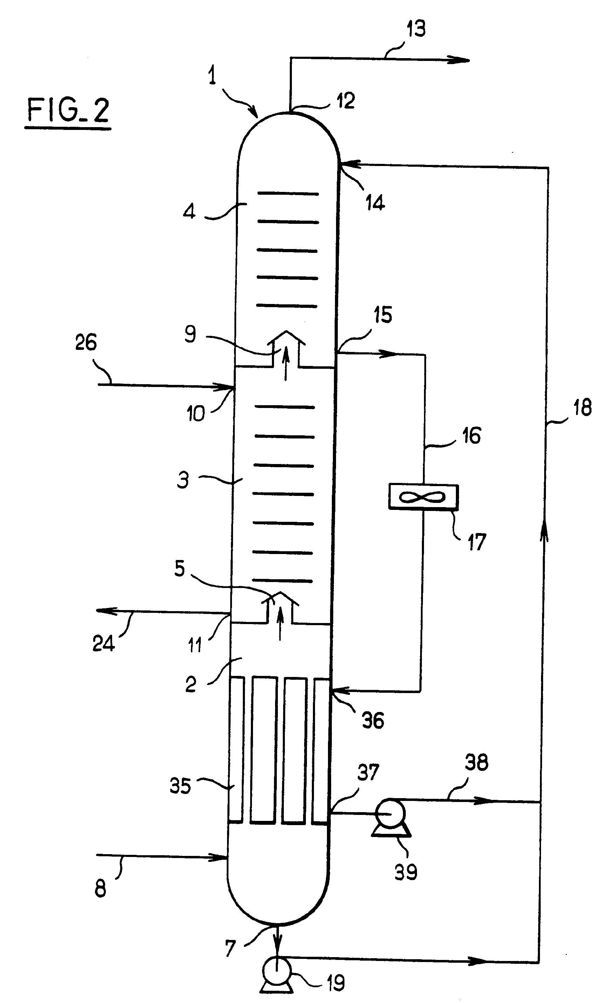

Le dispositif de la figure 2 représente une variante du dispositif schématisé sur la figure 1. Dans cette variante, les éléments identiques aux éléments du dispositif de la figure 1 sont repérés par les mêmes signes de référence. Par rapport au dispositif de la figure 1, la section 2 de refroidissement du dispositif de la figure 2 n'est plus garnie de plateaux de contact gaz/liquide, mais elle est équipée intérieurement d'un appareil 35 de refroidissement par échange indirect de chaleur, ledit appareil 35 présentant une entrée 36 pour les liquides, constituant l'entrée pour les liquides de la section 2 de refroidissement et reliée à la sortie 15 pour les liquides de la section 4 de réhydratation par le conduit 16 équipé d'un aéroréfrigérant à titre d'échangeur de chaleur 17, et une sortie 37 pour les liquides, reliée au conduit 18 par un conduit 38 sur lequel est montée une pompe 39 dont le refoulement est dirigé vers le conduit 18. De plus, comme pour le dispositif de la figure 1, les entrées 10 et sortie 11 pour les liquides de la section 3 de lavage sont reliées respectivement, par les conduits 26 et 24, aux sortie 23 et entrée 22 pour les liquides d'une colonne de régénération 20, non représentée et identique à celle schématisée sur la figure 1.

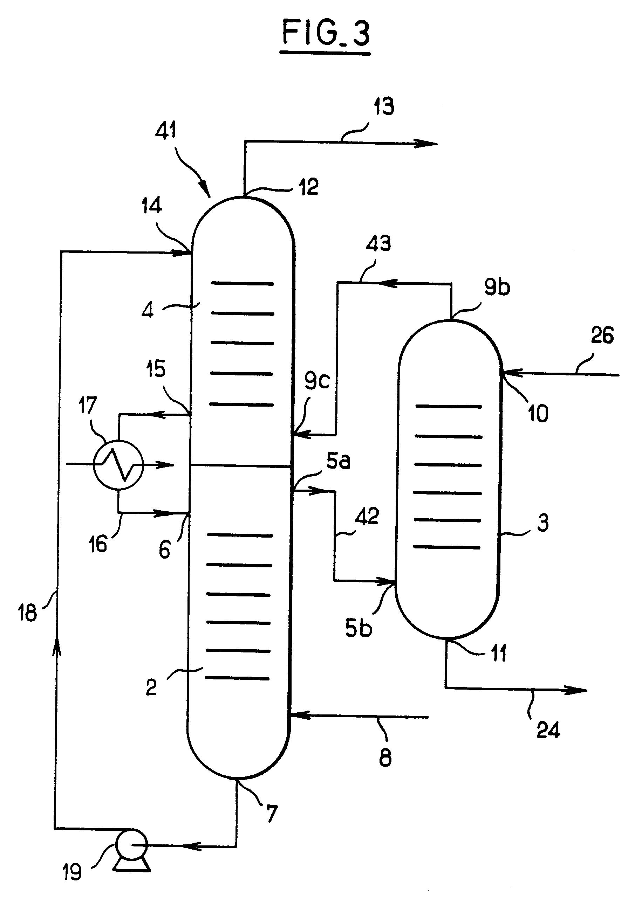

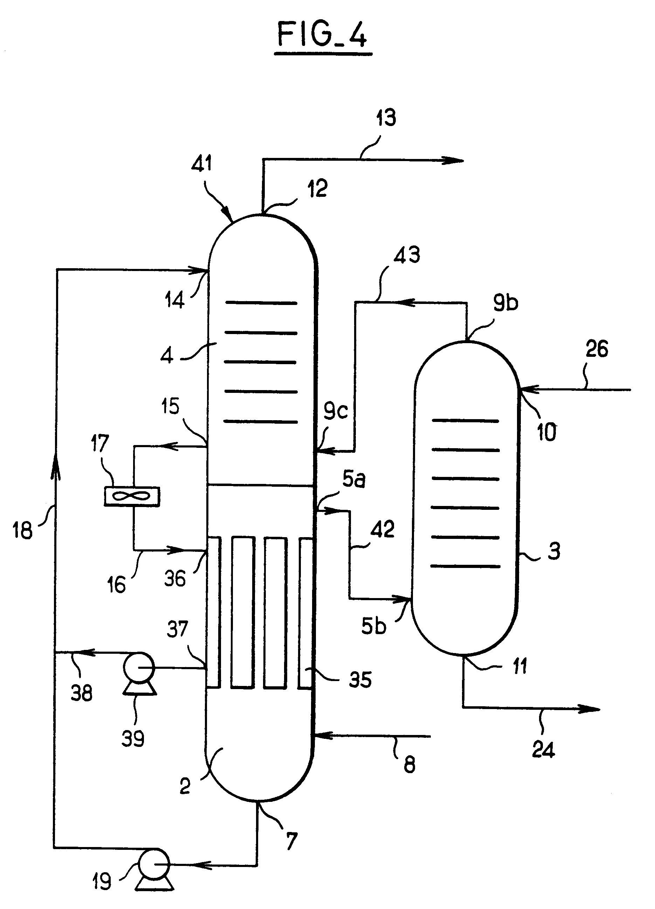

Le dispositif représente sur la figure 3, respectivement sur la figure 4, diffère seulement du dispositif représenté sur la figure 1, respectivement sur la figure 2, en ce que la section 3 de lavage constitue une colonne de lavage indépendante et que la section 2 de refroidissement et la section 4 de réhydratation sont deux sections superposées d'une même colonne 41, la sortie 5a pour les gaz de la section 2 de refroidissement étant reliée, par un conduit 42, à l'entrée 5b pour les gaz de la colonne 3 de lavage et la sortie 9b pour les gaz de ladite colonne 3 étant connectée, par un conduit 43, à l'entrée 9c pour les gaz de la section 4 de réhydratation. Les autres éléments du dispositif de la figure 3, respectivement du dispositif de la figure 4, sont identiques aux éléments de mêmes repères du dispositif de la figure 1, respectivement du dispositif de la figure 2. En particulier, les entrée 10 et sortie 11 pour les liquides de la colonne 3 de lavage sont reliées respectivement, par les conduits 26 et 24, aux sortie 23 et entrée 22 pour les liquides d'une colonne 20 de régénération non représentée et identique à celle schématisée sur la figure 1.

Le fonctionnement du dispositif représenté sur l'une ou l'autre des figures 1 à 4 peut être schématisé comme suit.

Le gaz à traiter, qui renferme l'H₂S à extraire et une quantité importante de vapeur d'eau, arrive par le conduit 8 dans la section 2 de refroidissement de la colonne 1 (figures 1 et 2) ou de la colonne 41 (figures 3 et 4) et rencontre dans ladite section, soit directement (figures 1 et 3) ou indirectement (figures 2 et 4) un courant d'eau arrivant par le conduit 16 en provenance de la section 4 de réhydratation et refroidi à une température appropriée dans l'échangeur de chaleur 17 monté sur le conduit 16 et fonctionnant en réfrigérant. La température du courant d'eau entrant dans la section 2 de refroidissement est ajustée, grâce au réfrigérant 17, pour que la quasi-totalité de l'eau contenue dans le gaz arrivant par le conduit 8 soit condensée et que ledit gaz soit amené à une température correspondant sensiblement à celle du lavage, ce qui conduit à l'obtention, en fond de section 2, d'un courant d'eau réchauffé par la chaleur sensible que lui a cédée le gaz au cours de son refroidissement, à laquelle s'ajoute la chaleur latente de l'eau condensée.

Le gaz refroidi et substantiellement débarrassé de son eau entre, par le passage 5 (figures 1 et 2) ou par le conduit 42 et le passage 5b (figures 3 et 4), dans la section ou colonne 3 de lavage, dans laquelle ledit gaz est soumis à un lavage à contre-courant par le liquide absorbant injecté dans ladite section ou colonne 3 par l'entrée 10. Le liquide absorbant chargé d'H₂S est soutiré de la section ou colonne 3 par la sortie 11, puis est dirigé par le conduit 24, en se réchauffant dans l'échangeur 25, dans la colonne 20 de régénération pour y être régénéré par rebouillage, le liquide absorbant régénéré étant recyclé à l'entrée 10 de la section ou colonne 3 par le conduit 26. Par le conduit 33 du condenseur 32 de la colonne de régénération est évacué un courant de gaz acide renfermant H₂S, qui peut être envoyé par exemple à une usine à soufre CLAUS.

Le gaz épuré par lavage dans la section ou colonne 3 entre, par le passage 9 pour les gaz (figures 1 et 2) ou par le conduit 43 et le passage 9c, dans la section 4 de réhydratation de la colonne 1 (figures 1 et 2) ou de la colonne 41 (figures 3 et 4), dans laquelle il rencontre à contre-courant un excès d'eau injecté par l'entrée 14 pour les liquides de la section de réhydratation, ladite eau arrivant par le conduit 18 avec une température supérieure à celle du gaz entrant dans ladite section 4 et suffisamment élevée pour évacuer, par la sortie 12 de la section 4 de réhydratation et le conduit 13, un gaz épuré réhydraté qui renferme une quantité d'eau correspondant à un débit massique d'eau sensiblement égal au débit massique de l'eau présente dans le gaz à traiter, avant refroidissement de ce dernier. L'eau non utilisée pour la réhydratation du gaz épuré sort de la section 4 par la sortie 15, ladite eau étant ramenée à la section 2 de refroidissement par le conduit 16 et avec une température ajustée par le réfrigérant 17.

Une circulation d'eau continue et contrôlée est donc établie en circuit fermé entre la section 2 de refroidissement du gaz à traiter et la section 4 de réhydratation du gaz épuré, de manière à céder en permanence au gaz épuré une quantité d'eau sensiblement égale à celle formée par condensation de la vapeur d'eau contenue dans le gaz à traiter et ce en court-circuitant la section ou colonne 3 de lavage.

L'ajustement de la température de l'eau injectée par le conduit 18 dans la section 4 de réhydratation peut être réalisé, comme c'est le cas avec le dispositif de la figure 1 ou de la figure 3, en ajustant la température de l'eau injectée dans la section 2 de refroidissement par le conduit 16, en agissant sur le réfrigérant 17, de manière à obtenir en sortie 7 de la section 2 de refroidissement un courant d'eau ayant la température élevée désirée pour son injection dans la section 4 de réhydratation par le conduit 18.

On peut encore ajuster la température de l'eau injectée par le conduit 18 dans la section 4 de réhydratation à la valeur appropriée, comme cela est possible avec le dispositif de la figure 2 ou de la figure 4, en contrôlant les débits relatifs des courants d'eau à températures différentes issus d'une part du système 35 de refroidissement et d'autre part du fond 7 de la section 2 de refroidissement (eau condensée).

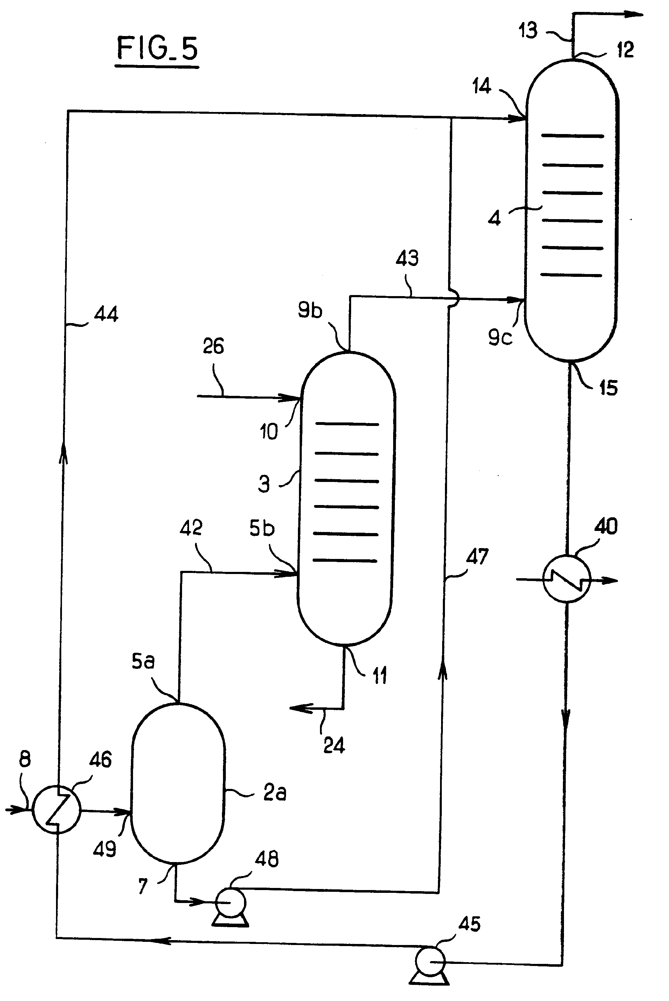

Le dispositif représenté sur la figure 5 comporte un ballon 2a de condensation, une colonne 3 de lavage et une colonne 4 de réhydratation, lesdites colonnes étant séparées les unes des autres et pourvues chacune de plateaux de contact gaz/liquide. Le ballon 2a de condensation présente en tête une sortie 5a pour les gaz et en fond une sortie 7 pour les liquides et dans sa partie inférieure débouche un conduit 8 d'amenée de gaz à traiter, sur lequel est monté le circuit chaud d'un échangeur indirect de chaleur 46. La colonne 3 de lavage présente en tête une sortie 9b pour les gaz, dans sa partie supérieure une entrée 10 pour le liquide absorbant régénéré, dans sa partie inférieure une entrée 5b pour les gaz et en fond une sortie 11 pour le liquide absorbant chargé d'H₂S. La colonne 4 de réhydratation présente en tête une sortie 12 pour les gaz, prolongée par un conduit 13 d'évacuation de gaz, dans sa partie supérieure une entrée 14 pour les liquides, dans sa partie inférieure une entrée 9c pour les gaz et en fond une sortie 15 pour les liquides. La sortie 5a pour les gaz du ballon 2a est reliée à l'entrée 5b pour les gaz de la colonne 3 par un conduit 42 et la sortie 9b pour les gaz de ladite colonne 3 est connectée à l'entrée 9c pour les gaz de la colonne 4 par un conduit 43. Un conduit 44, constituant un circuit d'eau, est connecté par l'une de ses extrémités à la sortie 15 pour les liquides de la colonne 4 de réhydratation et par son autre extrémité à l'entrée 14 pour les liquides de ladite colonne 4. Sur le conduit 44 est monté le circuit froid de l'échangeur de chaleur 46, ledit conduit 44 étant également équipé, d'une part d'une pompe 45, qui est disposée en amont de l'échangeur 46 et dont le refoulement est dirigé vers ledit échangeur et par conséquent vers l'entrée 14 de la colonne 4, et, d'autre part, d'un échangeur indirect de chaleur 40 disposé en amont de la pompe 45. En outre, la sortie 7 en fond du ballon 2a est reliée au conduit 44, en aval de l'échangeur de chaleur 46, par un conduit 47 sur lequel est monté une pompe 48 dont le refoulement est orienté vers le conduit 44. De plus, comme pour les dispositifs des figures 1 à 4, les entrée 10 et sortie 11 pour les liquides de la colonne 3 de lavage sont reliées respectivement, par les conduits 26 et 24, aux sortie 23 et entrée 22 pour les liquides d'une colonne 20 de régénération non représentée et identique à celle de la figure 1.

Le fonctionnement du dispositif représenté sur la figure 5 est comparable à celui des dispositifs schématisés sur les figures 1 à 4.

Le gaz à traiter, qui renferme l'H₂S à éliminer et une quantité importante de vapeur d'eau, arrive par le conduit 8 et traverse l'échangeur indirect de chaleur 46 avant de pénétrer dans le ballon 2a de condensation. Un courant d'eau circule en continu dans la colonne 4 de réhydratation puis dans le conduit 44, à partir de la sortie 15 pour les liquides de ladite colonne 4, pour revenir à la colonne 4 par l'entrée 14 de cette dernière après avoir traversé l'échangeur de chaleur 46. Dans cet échangeur de chaleur 46, le gaz à traiter est refroidi à la température appropriée inférieure a la température de rosée de l'eau qu'il contient par transfert de sa chaleur au courant d'eau plus froid véhiculé par le conduit 44 et ledit courant d'eau est porté à une température supérieure à ladite température de rosée. Dans le ballon 2a, le gaz refroidi se sépare de l'eau qui s'est condensée lors du passage du gaz à traiter dans l'échangeur de chaleur 46.

Le gaz refroidi et substantiellement débarrassé de son eau sort du ballon 2a par la sortie 5a pour les gaz et, après passage par le conduit 42, il pénètre par l'entrée 5b pour les gaz dans la colonne 3 de lavage, dans laquelle ledit gaz est soumis à un lavage à contre-courant par le liquide absorbant injecté dans ladite colonne 3 par l'entrée 10. Le liquide absorbant chargé d'H₂S est soutiré de la colonne 3 par la sortie 11, puis il est dirigé par le conduit 24, en se réchauffant dans l'échangeur 25, dans la colonne 20 de régénération pour y être régénéré par rebouillage, le liquide absorbant régénéré étant recyclé à l'entrée 10 de la colonne 3 par le conduit 26. Par le conduit 33 du condenseur 32 de la colonne de régénération est évacué un courant de gaz acide renfermant H₂S, ledit courant étant par exemple envoyé à une usine à soufre CLAUS.

Le gaz débarrassé d'H₂S par lavage dans la colonne 3 sort de ladite colonne par la sortie 9b pour les gaz et, après passage par le conduit 43, il pénètre par l'entrée 9c pour les gaz dans la colonne 4 de réhydratation, dans laquelle il rencontre à contre-courant un excès d'eau injecté par l'entrée 14 pour les liquides de la colonne 4 de réhydratation. Cette eau arrive par le conduit 44 avec une température supérieure à celle du gaz entrant dans ladite colonne 4 par l'entrée 9c pour les gaz, ladite température étant suffisamment élevée pour évacuer, par la sortie 12 de la colonne 4 et le conduit 13, un gaz épuré réhydraté renfermant une quantité d'eau correspondant à- un débit massique d'eau substantiellement égal au débit massique de l'eau présente dans le gaz à traiter, avant refroidissement de ce dernier. L'eau non utilisée pour la réhydratation du gaz épuré sort de la colonne 4 par la sortie 15, ladite eau étant ramenée à la colonne 4 par le conduit 44 comme indiqué précédemment après avoir été tout d'abord refroidie dans l'échangeur indirect de chaleur 40, puis réchauffée dans l'échangeur de chaleur 46 et avoir été additionnée, par le conduit 47, de la quantité requise d'eau condensée prélevée dans le ballon 2a par la sortie 7 pour les liquides.

L'ajustement de la température de l'eau injectée par le conduit 44 dans la colonne 4 de réhydratation est réalisé en contrôlant les débits d'eau dans les conduits 44 et 47 par action sur les pompes 45 et 48 montées sur lesdits conduits.

Cette mise en oeuvre conduit encore à céder en permanence au gaz épuré une quantité d'eau sensiblement égale à celle formée par condensation de la vapeur d'eau contenue dans le gaz à traiter et cela sans que cette eau transite par la colonne 3 de lavage.

Pour compléter la description précédente, on donne ci-après, à titre illustratif et non limitatif, deux exemples concrets de mise en oeuvre du procédé selon l'invention.

### EXEMPLE 1

En opérant dans un dispositif analogue à celui représenté sur la figure 1, on traitait un gaz résiduaire renfermant, en volume, 0,35 % d'H₂S, 1,65 % de CO, 25 % de CO₂, 29 % de vapeur d'eau et 44 % d'azote, ledit gaz résultant de l'hydrogénation et hydrolyse d'un gaz résiduaire d'une usine à soufre CLAUS.

Dans le dispositif utilisé, les sections 2 de refroidissement, 3 de lavage et 4 de réhydratation de la colonne 1 comportaient chacune 10 plateaux de contact gaz/liquide et la colonne 20 de régénération en comportait 20.

Le liquide absorbant utilisé dans la section 3 de lavage consistait en une solution aqueuse 4N de méthyldiéthanolamine (en abrégé MDEA), absorbant sélectif de l'H₂S.

Le gaz à traiter arrivait dans la section 2 de refroidissement avec un débit de 160 000 Nm³/h, une température de 110°C et une pression absolue d'environ 1,3 bars et rencontrait à contre-courant dans ladite section 2 de refroidissement un courant d'eau injecté par l'entrée 6 pour les liquides de cette section avec un débit de 450 m³/h et une température de 15°C. Au contact du courant d'eau injecté par l'entrée 6 de la section 2 de refroidissement, la quasi-totalité de l'eau contenue dans le gaz à traiter se condensait et se mélangeait audit courant avec obtention, en fond de ladite section 2, d'une eau ayant une température de 93°C et, en tête de cette section, d'un gaz refroidi ayant une température de 20°C et substantiellement exempt d'eau.

Le gaz refroidi entrait, par le passage 5, dans la section 3 de lavage avec une température de 20°C et rencontrait à contre-courant, dans cette section 3, le liquide absorbant régénéré injecté par l'entrée 10 avec un débit de 800 m³/h et une température de 20°C, ledit liquide absorbant arrivant de la colonne de régénération 20 par le conduit 26. Le liquide absorbant chargé d'H₂S sortait de la section 3 de lavage par la sortie 11, avec un débit de 800 m³/h, et était amené à la colonne 20 de régénération, dans laquelle, aux fins de régénération, il était porté en fond de cette colonne 20 à une température d'environ 125°C au moyen de vapeur d'eau circulant dans la tubulure 30 du rebouilleur. Le liquide absorbant régénéré était ramené à l'entrée 10 de la section 3 de lavage par le conduit 26.

Le gaz épuré entrait, par le passage 9, dans la section 4 de réhydratation avec une température de 20°C et rencontrait à contre-courant un courant d'eau injecté dans cette section par l'entrée 14 avec une température de 93°C et un débit de 500 m³/h, ledit courant d'eau étant amené par le conduit 18, sous l'action de la pompe 19, depuis le fond 7 de la section 2 de refroidissement. Par le conduit 13 prolongeant la sortie 12 pour les gaz en tête de la section 4 de réhydratation, on évacuait, avec un débit de 150 000 Nm³/h, un gaz épuré réhydraté contenant moins de 100 v.p.m. (volumes par million) d'H₂S et présentant une température de rosée de l'eau de 70°C, ladite température étant très voisine de la température de rosée de l'eau du gaz à traiter arrivant par le conduit 8. L'eau non utilisée dans la section 4 de réhydratation sortait de ladite section par la sortie 15 avec un débit de 450 m³/h et une température de 23°C. Cette eau était amenée, par le conduit 16, à l'entrée 6 de la section 2 de refroidissement après avoir été refroidie à 15°C par passage dans le réfrigérant 17 monté sur le conduit 16.

Le gaz épuré réhydraté, sortant par le conduit 13 d'évacuation, évacuait en continu une quantité de vapeur d'eau correspondant à un débit massique d'eau sensiblement égal au débit massique de l'eau condensée dans la section 2 par refroidissement du gaz à traiter. Le gaz épuré réhydraté était ensuite soumis à une incinération, pour transformer en SO₂ les dernières traces d'H₂S qu'il contenait, puis rejeté à l'atmosphère.

### EXEMPLE 2 :

En opérant dans un dispositif analogue à celui représenté sur la figure 2, on traitait un gaz résiduaire ayant la même composition que le gaz traité dans l'exemple 1, ce gaz résiduaire provenant encore de l'hydrogénation et l'hydrolyse d'un gaz résiduaire d'une usine à soufre CLAUS. Dans le dispositif utilisé, la section 2 de refroidissement était équipée d'un appareil 35 d'échange indirect de chaleur, les sections 3 de lavage et 4 de réhydratation comportaient respectivement 10 et 6 plateaux de contact gaz/liquide et la colonne 20 de régénération en comportait 20.

Le liquide absorbant utilisé était identique à celui employé dans l'exemple 1.

Le gaz à traiter arrivait dans la section 2 de refroidissement avec un débit de 160 000 Nm³/h, une température de 120°C et une pression absolue de 1,3 bars et était refroidi, dans ladite section 2, à une température de 50°C par échange indirect de chaleur avec le courant d'eau injecté dans l'appareil 35 échangeur de chaleur, par l'entrée 36 de ce dernier, avec un débit de 800 m³/h et une température de 45°C. Au contact indirect du courant d'eau injecté par l'entrée 36 de l'appareil échangeur 35, la quasi-totalité de l'eau contenue dans le gaz à traiter se condensait avec obtention, en fond de la section 2, d'un courant d'eau condensée ayant une température de 90°C et, en tête de cette section, d'un gaz refroidi ayant une température de 50°C et substantiellement exempt d'eau, un courant d'eau chaude ayant une température de 90°C étant également obtenu à la sortie 37 de l'appareil échangeur 35.

Le gaz refroidi entrait, par le passage 5, dans la section 3 de lavage avec une température de 50°C et rencontrait à contre-courant, dans cette section, le liquide absorbant régénéré injecté par l'entrée 10 avec un débit de 1300 m³/h et une température de 45°C, ledit liquide absorbant arrivant de la colonne 20 de régénération par le conduit 26. Le liquide absorbant chargé d'H₂S sortait de la section 3 de lavage par la sortie 11, avec un débit de 1300 m³/h, et était amené à la colonne 20 de régénération, dans laquelle, aux fins de régénération, il était porté en fond de ladite colonne à une température d'environ 125°C au moyen de vapeur d'eau circulant dans la tubulure 30 du rebouilleur 29. Le liquide absorbant régénéré était ramené à l'entrée 10 de la section 3 de lavage par le conduit 26.

Le gaz épuré entrait, par le passage 9, dans la section 4 de réhydratation avec une température de 45°C et rencontrait à contre-courant un courant d'eau injecté dans cette section par l'entrée 14 avec une température de 90°C et un débit de 840 m³/h, ledit courant étant formé par la réunion, d'une part, du courant d'eau s'écoulant avec une température de 90°C par la sortie 36 de l'appareil échangeur 35 et pompé, par la pompe 39, dans le conduit 38 avec un débit de 800 m³/h et, d'autre part, d'un courant d'eau condensée soutiré, avec une température de 90°C, par la sortie 7 de la section 2 et pompé, par la pompe 19, dans le conduit 18, en amont du conduit 38, avec un débit de 40m³/h.

Par le conduit 13 prolongeant la sortie 12 pour les gaz en tête de la section 4 de réhydratation, on évacuait, avec un débit de 150 000 Nm³/h, un gaz épuré réhydraté contenant moins de 200 v.p.m. d'H₂S et présentant une température de rosée de l'eau de 70°C, ladite température étant très voisine de la température de rosée de l'eau du gaz à traiter arrivant par le conduit 8. L'eau non utilisée dans la section 4 de réhydratation sortait de ladite section par la sortie 15 avec un débit de 800 m³/h et une température de 60°C. Cette eau était amenée, par le conduit 16, à l'entrée 36 de l'appareil échangeur 35 après avoir été refroidie à 45°C par passage dans l'aéroréfrigérant 17 monté sur le conduit 16.

Le gaz épuré réhydraté, sortant par le conduit 13, évacuait en continu une quantité de vapeur d'eau correspondant à un débit massique d'eau sensiblement égal au débit massique de l'eau condensée dans la section 2 par refroidissement du gaz à traiter. Le gaz épuré réhydraté était ensuite soumis à une incinération, puis rejeté à l'atmosphère.

## Revendications

1. Procédé d'élimination de l'H₂S présent, en concentration allant de 10 v.p.m. à 10% en volume, dans un gaz renfermant également, 5% à 60% en volume de vapeur d'eau et contenant éventuellement d'autres gaz tels que CO₂, dans lequel on refroidit le gaz à traiter à une température inférieure à la température de rosée de l'eau qu'il contient de manière à séparer dudit gaz, par condensation, la quasi-totalité de son eau et on lave le gaz refroidi, débarrassé de son eau, avec un liquide absorbant fixant l'H₂S et régénérable, la température régnant dans la zone de lavage étant inférieure à la température de rosée de l'eau du gaz à traiter et sensiblement égale à celle du liquide absorbant introduit dans ladite zone, pour former un liquide absorbant chargé d'H₂S, qui est régénéré et réutilisé, et un gaz épuré substantiellement exempt d'eau et d'H₂S, ledit procédé se caractérisant en ce que l'on met en contact ledit gaz épuré avec une quantité suffisante d'eau qui renferme l'eau produite lors du refroidissement du gaz à traiter et éventuellement d'autres eaux résiduaires et qui est portée à une température appropriée supérieure à celle du gaz épuré, de manière à produire un gaz épuré réhydraté ayant une température telle que la quantité d'eau qu'il renferme corresponde à un débit massique d'eau substantiellement égal au débit massique de l'eau présente dans le gaz à traiter, avant refroidissement de ce dernier, et des eaux résiduaires éventuellement rajoutées et en ce que l'eau servant à réhydrater le gaz épuré circule en circuit fermé, ledit circuit étant alimenté par l'eau condensée produite lors du refroidissement du gaz à traiter et éventuellement par des eaux résiduaires d'autres provenances et cédant de l'eau au gaz épuré lors de la réhydratation de ce dernier.

2. Procédé selon la revendication 1, caractérisé en ce que le gaz à traiter possède une teneur en H₂S allant de 50 v.p.m. à 6% en volume.

3. Procédé selon la revendication 1 ou 2, caractérisé en ce que le gaz à traiter est un gaz résiduaire produit par hydrogénation et hydrolyse d'un gaz résiduaire d'usine à soufre pour amener tous les composés du soufre présents dans ce gaz sous l'unique forme d'H₂S.

4. Procédé selon l'une des revendications 1 à 3, caractérisé en ce que le refroidissement du gaz à traiter est réalisé par échange de chaleur direct ou indirect avec l'eau du circuit de réhydratation du gaz épuré après l'opération de réhydratation et le refroidissement de ladite eau à la température appropriée.

5. Procédé selon l'une des revendications 1 à 4, caractérisé en ce que le gaz à traiter referme CO₂ en plus de l'H₂S.

6. Procédé selon la revendication 5, caractérisé en ce que le liquide absorbant est choisi parmi ceux fixant sélectivement l'H₂S.

7. Procédé selon l'une des revendications 1 à 6, caractérisé en ce que le liquide absorbant est une solution aqueuse d'une ou plusieurs amines choisies parmi les alcanolamines telles que la méthyldiéthanolamine, la triéthanolamine et la diisopropanolamine et parmi les amines stériquement encombrées, la concentration en amine de ladite solution étant avantageusement comprise entre 1N et 8N et se situant de préférence entre 3N et 6N.

8. Procédé selon l'une des revendications 1 à 7, caractérisé en ce que le lavage du gaz refroidi par le liquide absorbant est réalisé à une température inférieure à 70°C, ladite température étant de préférence comprise entre 5°C et 55°C.

9. Dispositif pour l'élimination de l'H₂S contenu, en concentration allant de 10 v.p.m à 10% en volume, dans un gaz renfermant également 5 à 60% en volume de vapeur d'eau et contenant éventuellement d'autres gaz tels que CO₂, ledit dispositif comportant un système de refroidissement (46,2a) du gaz à traiter, qui est pourvu d'un conduit (8) d'amenée du gaz à traiter et qui présente en outre une sortie (5a) pour les gaz et une sortie (7) pour les liquides, une colonne (3) de lavage, qui présente en tête une sortie (9b) pour les gaz, dans sa partie supérieure une entrée (10) pour le liquide absorbant régénéré et dans sa partie inférieure une sortie (11) pour le liquide absorbant chargé et une entrée (5b) pour les gaz, cette dernière étant reliée à la sortie (5a) pour les gaz du système de refroidissement, et une colonne de régénération (20), qui présente en tête une sortie (21) pour un courant gazeux acide, en fond une sortie (23) pour le liquide absorbant régénéré, cette sortie étant reliée par un conduit (26) à l'entrée (10) pour le liquide absorbant de la colonne (3) de lavage, et dans sa partie supérieure une entrée (22) pour le liquide absorbant chargé, ladite entrée étant reliée par un conduit (24) à la sortie correspondante (11) de la colonne (3) de lavage, et se caractérisant en ce qu'il comporte en outre, d'une part, une colonne (4) de réhydratation, qui présente en tête une sortie (12) pour les gaz, dans sa partie supérieure une entrée (14) pour les liquides et dans sa partie inférieure une sortie (15) pour les liquides et une entrée (9c) pour les gaz, cette entrée étant en communication avec la sortie (9b) pour les gaz de la colonne de lavage, et, d'autre part, un circuit (44) d'eau de réhydratation ayant une extrémité connectée à la sortie (15) pour les liquides de la colonne (4) de réhydratation et une autre extrémité reliée à l'entrée (14) pour les liquides de ladite colonne (4), ledit circuit (44) étant associé au système de refroidissement (46, 2a) de telle sorte que, d'une part, l'eau condensée par le refroidissement du gaz à traiter passe, par la sortie (7) pour les liquides du système de refroidissement, dans l'extrémité du circuit de réhydratation reliée à l'entrée (14) pour les liquides de la colonne (4) de réhydratation et que, d'autre part, l'eau de réhydratation de ce circuit soit réchauffé par échange de chaleur direct (2) ou indirect (35) avec le gaz à traiter, le circuit (44) d'eau de réhydratation étant également pourvu de moyens pour assurer la circulation (45) et le refroidissement (40) de l'eau qu'il contient, ces moyens étant disposés entre la sortie de la colonne de réhydratation et le système de refroidissement, et éventuellement de moyens d'introduction d'eaux résiduaires.

10. Dispositif selon la revendication 9, caractérisé en ce que le système de refroidissement du gaz à traiter comporte un échangeur indirect de chaleur (46) et un ballon de condensation (2a) présentant une entrée (49) et pourvu d'une sortie (5a) pour les gaz et d'une sortie (7) pour les liquides, lesdites sorties constituant respectivement les sorties pour les gaz et pour les liquides du système de refroidissement, l'un des circuits de l'échangeur indirect de chaleur (46) faisant partie du circuit (44) d'eau de réhydratation tandis que l'autre circuit dudit échangeur relie le conduit (8) d'amenée du gaz à traiter à l'entrée (49) du ballon de condensation (2a).

11. Dispositif selon la revendication 9, caractérisé en ce que le système de refroidissement consiste en une colonne (2) de refroidissement, qui est pourvue, dans sa partie supérieure, d'une sortie (5a) pour les gaz et d'une entrée (6) pour les liquides et, dans sa partie inférieure, du conduit (8) d'amenée du gaz à traiter et d'une sortie (7) pour les liquides, lesdites sorties pour les gaz (5a) et pour les liquides (7) constituant respectivement les sorties pour les gaz et pour les liquides du système de refroidissement, ladite colonne (2) de refroidissement étant montée sur le circuit (44) d'eau de réhydratation par ses entrée (6) et sortie (7) pour les liquides.

12. Dispositif selon la revendication 11, caractérisé en ce que la colonne (2) de refroidissement est équipée d'un appareil (35) d'échange indirect de chaleur comportant une entrée (36) et une sortie (37) et dont l'entrée (36) constitue l'entrée (6) pour les liquides de ladite colonne de refroidissement, l'appareil (35) étant monté par ses entrée (36) et sortie (37) sur le circuit (44) d'eau de réhydratation.

13. Dispositif selon la revendication 11 ou 12, caractérisé en ce que les colonnes de refroidissement (2) et de réhydratation (4) forment deux sections superposées (2,4) et indépendantes d'une même colonne (41).

14. Dispositif selon la revendication 11 ou 12, caractérisé en ce que les colonnes de refroidissement (2), de lavage (3) et de réhydratation (4) constituent trois sections superposées d'une même colonne (1), à savoir une section (2) inférieure de refroidissement, une section (3) intermédiaire de lavage et une section (4) supérieure de réhydratation, de telle sorte que la sortie pour les gaz de la section (2) et l'entrée pour les gaz de la section (3) coincident en formant un passage 5 pour les gaz et que la sortie pour les gaz de la section (3) et l'entrée pour les gaz de la section (4) coincident en formant un passage (9) pour les gaz.

## Patentansprüche

1. Verfahren zur Entfernung von Schwefelwasserstoff, der in einer Konzentration von 10 vpm bis 10 Vol.-% in einem Gas vorliegt, das außerdem noch 5 bis 60 Vol.-% Wasserdampf und gegebenenfalls andere Gase wie CO₂ enthält, durch Abkühlen des zu behandelnden Gases auf eine Temperatur unterhalb des Taupunkts des in ihm enthaltenen Wassers, um durch Kondensation annähernd die gesamte Menge des Wassers vom Gas abzutrennen, und durch Waschen des abgekühlten, vom Wasser befreiten Gases mit einer absorbierenden Flüssigkeit, die den Schwefelwasserstoff aufnimmt und regenerierbar ist, wobei die in der Waschzone herrschende Temperatur unterhalb des Taupunkts des Wassers des zu behandelnden Gases liegt und im wesentlichen der dieser Zone zugeführten absorbierenden Flüssigkeit entspricht, um eine mit Schwefelwasserstoff beladene absorbierende Flüssigkeit, die regeneriert und erneut verwendet wird, und ein gereinigtes, im wesentlichen von Wasser und Schwefelwasserstoff befreites Gas zu bilden, dadurch **gekennzeichnet**, daß man des gereinigte Gas mit einer ausreichenden Menge Wasser kontaktiert, welches das während der Abkühlung des zu behandelnden Gases erzeugte Wasser und gegebenenfalls andere Abwässer enthält, und das auf eine Temperatur gebracht wird, die entsprechend über derjenigen des gereinigten Gases liegt, um ein gereinigtes rehydratisiertes Gas zu erzeugen, das eine Temperatur aufweist, bei der die darin enthaltene Wassermenge einem Massedurchsatz entspricht, der im wesentlichen dem Massedurchsatz des Wassers, das in dem zu behandelnden Gas enthalten ist, bevor man dieses abkühlt, und gegebenenfalls zugesetzter Abwässer entspricht, und daß das der Rehydratisierung des gereinigten Gases dienende Wasser in einem geschlossenen Kreislauf fließt, wobei dieser durch das kondensierte Wasser gespeist wird, das während der Abkühlung des zu behandelnden Gases und gegebenenfalls von Abwässern anderer Herkunft erzeugt wurde und an das gereinigte Gas während dessen Rehydratisierung Wasser abgibt.

2. Verfahren nach Anspruch 1, dadurch **gekennzeichnet**, daß das zu behandelnde Gas einen H₂S-Gehalt von 50 vpm bis 6 Vol.-% aufweist.

3. Verfahren nach Anspruch 1 oder 2, dadurch **gekennzeichnet**, daß das zu behandelnde Gas ein Abgas ist, das hergestellt wurde durch Hydrierung und Hydrolyse eines Abgases einer Schwefelfabrik, um sämtliche in diesem Gas enthaltenen Schwefelverbindungen ausschließlich in H₂S überzuführen.

4. Verfahren nach einem der Ansprüche 1 bis 3, dadurch **gekennzeichnet**, daß die Abkühlung des zu behandelnden Gases durch direkten oder indirekten Wärmeaustausch mit dem Wasser des Kreislaufes zur Rehydratisierung des gereinigten Gases nach der Rehydratisierung und der Abkühlung des Wassers auf die entsprechende Temperatur durchgeführt wird.

5. Verfahren nach einem der Ansprüche 1 bis 4, dadurch **gekennzeichnet**, daß das zu behandelnde Gas außer H₂S auch noch CO₂ enthält.

6. Verfahren nach Anspruch 5, dadurch **gekennzeichnet**, daß die absorbierende Flüssigkeit ausgewählt wird unter solchen, die selektiv H₂S aufnehmen.

7. Verfahren nach einem der Ansprüche 1 bis 6, dadurch **gekennzeichnet**, daß die absorbierende Flüssigkeit eine wässerige Lösung eines oder mehrerer Amine darstellt, ausgewählt unter Alkanolaminen wie Methyldiethanolamin, Triethanolamin und Diisopropanolamin, sowie unter sterisch gehinderten Aminen, wobei die Aminkonzentration der Lösung vorteilhafterweise zwischen 1 N und 8 N liegt und insbesondere zwischen 3 N und 6 N.

8. Verfahren nach einem der Ansprüche 1 bis 7, dadurch **gekennzeichnet**, daß das Waschen des abgekühlten Gases mit der absorbierenden Flüssigkeit bei einer Temperatur unterhalb 70°C durchgeführt wird, wobei diese Temperatur vorzugsweise zwischen 5 und 55°C liegt.

9. Vorrichtung zur Entfernung von Schwefelwasserstoff, der in einer Konzentration von 10 vpm bis 10 Vol.-% in einem Gas vorliegt, das außerdem noch 5 bis 60 Vol.-% Wasserdampf und gegebenenfalls andere Gase wie CO₂ enthält, wobei die Vorrichtung ein System (46, 2a) zur Abkühlung des zu behandelnden Gases, das mit einer Leitung (8) für die Zufuhr des zu behandelnden Gases ausgestattet ist und außerdem eine Austrittsöffnung (5a) für die Gase und eine Austrittsöffnung (7) für die Flüssigkeiten aufweist, eine Rieselkolonne (3), die an ihrer Spitze eine Austrittsöffnung (9b) für die Gase, im oberen Teil eine Eintrittsöffnung (10) für die regenerierte absorbierende Flüssigkeit und im unteren Teil eine Austrittsöffnung (11) für die beladene absorbierende Flüssigkeit und eine Eintrittsöffnung (5b) für die Gase aufweist, wobei diese mit der Austrittsöffnung (5a) für die Gase des Abkühlungssystems verbunden ist, und eine Regenerierungskolonne (20) umfaßt, die an ihrer Spitze eine Austrittsöffnung (21) für einen sauren Gasstrom, am Boden eine Austrittsöffnung (23) für die regenerierte absorbierende Flüssigkeit, wobei diese Austrittsöffnung über eine Leitung (26) mit der Eintrittsöffnung (10) für die absorbierende Flüssigkeit der Rieselkolonne (3) verbunden ist, und im oberen Teil eine Eintrittsöffnung (22) für die beladene absorbierende Flüssigkeit aufweist, wobei diese Eintrittsöffnung über eine Leitung (24) mit der entsprechenden Austrittsöffnung (11) der Rieselkolonne (3) verbunden ist, dadurch **gekennzeichnet**, daß sie außerdem noch einerseits eine Rehydratisierungskolonne (4), die an ihrer Spitze eine Austrittsöffnung (12) für die Gase, in ihrem oberen Teil eine Eintrittsöffnung (14) für die Flüssigkeiten und in ihrem unteren Teil eine Austrittsöffnung (15) für die Flüssigkeiten und eine Eintrittsöffnung (9c) für die Gase umfaßt, wobei diese mit der Austrittsöffnung (9b) für die Gase der Rieselkolonne in Verbindung steht, und andererseits einen Kreislauf (44) für das Rehydratisierungswasser, dessen ein Ende mit der Austrittsöffnung (15) für die Flüssigkeiten der Rehydratisierungskolonne (4) verbunden ist, und dessen anderes Ende mit der Eintrittsöffnung (14) für die Flüssigkeiten der Kolonne (4) verbunden ist, wobei der Kreislauf (44) mit dem Kühlsystem (46, 2a) so verbunden ist, daß einerseits das durch die Abkühlung des zu behandelnden Gases kondensierte Wasser durch die Austrittsöffnung (7) für die Flüssigkeiten des Kühlsystems am Ende des Rehydratisierungskreislaufs hindurchtritt, der mit der Eintrittsöffnung (14) für die Flüssigkeiten der Rehydratisierungskolonne (4) verbunden ist und andererseits das Rehydratisierungswasser dieses Kreislaufs durch direkten (2) oder indirekten (35) Wärmetausch mit dem zu behandelnden Gas erwärmt wird, wobei der Kreislauf (44) des Rehydratisierungswassers außerdem mit Einrichtungen für die Zirkulierung (45) und die Abkühlung (40) des darin enthaltenen Wassers ausgestattet ist und diese zwischen der Austrittsöffnung der Rehydratisierungskolonne und dem Kühlsystem angeordnet sind, und gegebenenfalls mit Einrichtungen für die Zufuhr von Abwässern ausgestattet ist.

10. Vorrichtung nach Anspruch 9, dadurch **gekennzeichnet**, daß das System zur Abkühlung des zu behandelnden Gases einen indirekten Wärmetauscher (46) und einen Kondensationskolben (2a) umfaßt, der eine Eintrittsöffnung (49) aufweist und mit einer Austrittsöffnung (5a) für die Gase und einer Austrittsöffnung (7) für die Flüssigkeiten versehen ist, wobei die Austrittsöffnungen die Austrittsöffnungen für die Gase bzw. die Flüssigkeiten des Kühlsystems bilden, der eine der Kreisläufe des indirekten Wärmetauschers (46) Teil des Kreislaufs (44) für das Rehydratisierungswasser ist, während der andere Kreislauf des Wärmetauschers die Leitung (8) für die Zufuhr des zu behandelnden Gases mit der Eintrittsöffnung (49) des Kondensationskolbens (2a) verbindet.

11. Vorrichtung nach Anspruch 9, dadurch **gekennzeichnet**, daß das Kühlsystem aus einer Kühlkolonne (2) besteht, die in ihrem oberen Teil mit einer Austrittsöffnung (5a) für die Gase und einer Eintrittsöffnung (6) für die Flüssigkeiten und in ihrem unteren Teil mit einer Leitung (8) für die Zufuhr des zu behandelnden Gases und einer Austrittsöffnung (7) für die Flüssigkeiten versehen ist, wobei die Austrittsöffnungen die Austrittsöffnungen für die Gase (5a) bzw. die Flüssigkeiten des Kühlsystems bilden und die Kühlkolonne (2) in den Kreislauf (44) für das Rehydratisierungswasser über ihre Eintrittsöffnung (6) und die Austrittsöffnung (7) für die Flüssigkeiten eingebaut ist.

12. Vorrichtung nach Anspruch 11, dadurch **gekennzeichnet**, daß die Kühlkolonne (2) mit einem indirekten Wärmetauscher (35) ausgestattet ist, der eine Eintrittsöffnung (36) und eine Austrittsöffnung (37) umfaßt und dessen Eintrittsöffnung (36) die Eintrittsöffnung (6) für die Flüssigkeiten der Kühlkolonne bildet, und die Apparatur (35) über ihre Eintrittsöffnung (36) und die Austrittsöffnung (37) in den Kreislauf (44) für das Rehydratisierungswasser eingebaut ist.

13. Vorrichtung nach einem der Ansprüche 11 oder 12, dadurch **gekennzeichnet**, daß die Kühlkolonne (2) und die Rehydratisierungskolonne (4) zwei übereinander angeordnete und unabhängige Abschnitte (2, 4) einer und derselben Kolonne (41) bilden.

14. Vorrichtung nach einem der Ansprüche 11 oder 12, dadurch **gekennzeichnet**, daß die Kühlkolonne (2), die Rieselkolonne (3) und die Rehydratisierungskolonne (4) drei übereinander angeordnete Abschnitte einer und derselben Kolonne (1) bilden, d.h. einen unteren Kühlabschnitt (2), einen mittleren Rieselabschnitt (3) und einen oberen Rehydratisierungsabschnitt (4), so daß die Austrittsöffnung für die Gase des Abschnitts (2) und die Eintrittsöffnung für die Gase des Abschnitts (3) zusammenfallen, wobei sie einen Kanal (5) für die Gase bilden, und die Austrittsöffnung für die Gase des Abschnitts (3) und die Eintrittsöffnung für die Gase des Abschnitts (4) zusammenfallen, wobei sie einen Kanal (9) für die Gase bilden.

## Claims

1. Process for eliminating the H₂S present in concentrations from 10 vpm to 10 volume % in a gas which also contains 5 to 60 volume % of steam and optionally contains other gases such as CO₂, in which the gas to be treated is cooled to a temperature below the dew point temperature of the water present therein so as to separate almost all of the water from the said gas by condensation, and the cooled gas, freed of its water, is washed with an absorbent liquid which fixes the H₂S and can be regenerated, the temperature prevailing in the washing area being lower than the dew point temperature of the water in the gas to be treated and substantially equal to that of the absorbent liquid introduced into the said area, so as to form an absorbent liquid which is charged with H₂S and is regenerated and reused, and a purified gas which is substantially free of water and H₂S, the said process being characterised in that the said purified gas is brought into contact with a sufficient quantity of water containing the water produced when the gas to be treated is cooled and optionally other residual water, and which is brought to a suitable temperature which is greater than that of the purified gas so as to produce a rehydrated purified gas having a temperature such that the amount of water it contains corresponds to a mass flow rate of water which is substantially equal to the mass flow rate of water present in the gas to be treated, before the latter is cooled, and the residual water optionally added; and in that the water used to rehydrate the purified gas circulates in a closed circuit, the said circuit being supplied with condensed water produced when the gas to be treated is cooled and optionally with residual water from other sources and yielding water to the purified gas when the latter is rehydrated.

2. Process according to Claim 1, characterised in that the gas to be treated has an H₂S content ranging from 50 vpm to 6 volume %.

3. Process according to Claim 1 or 2, characterised in that the gas to be treated is a residual gas produced by the hydrogenation and hydrolysis of a residual sulphur factory gas such that all the sulphur compounds present in this gas are converted to the single H₂S form.

4. Process according to any one of Claims 1 to 3, characterised in that the gas to be treated is cooled as a result of direct or indirect heat exchange with the water in the rehydration circuit of the purified gas after the rehydration operation and the cooling of the said water to the appropriate temperature.

5. Process according to any one of Claims 1 to 4, characterised in that the gas to be treated contains CO₂ in addition to H₂S.

6. Process according to Claim 5, characterised in that the absorbent liquid is selected from those which selectively fix H₂S.

7. Process according to any one of Claims 1 to 6, characterised in that the absorbent liquid is an aqueous solution of one or more amines selected from alkanol amines such as methyl diethanol amine, triethanol amine and diisopropanol amine and from sterically hindered amines, the amine concentration of the said solution advantageously being between 1N and 8N and preferably being between 3N and 6N.

8. Process according to any one of Claims 1 to 7, characterised in that the cooled gas is washed by the absorbent liquid at a temperature of less than 70°C, the said temperature preferably being between 5°C and 55°C.

9. Device for eliminating H₂S present in concentrations ranging from 10 vpm to 10 volume % in a gas likewise containing 5 to 60 volume % of steam and optionally containing other gases such as CO₂, the said device comprising a cooling system (46, 2a) for the gas to be treated, which is provided with a conduit (8) for supplying the gas to be treated and which further has an outlet (5a) for the gases and an outlet (7) for the liquids, a washing column (3) which has at its head an outlet (9b) for the gases, at the top an inlet (10) for the regenerated absorbent liquid and at the bottom an outlet (11) for the charged absorbent liquid and an inlet (5b) for the gases, the latter being connected to the cooling system gas outlet (5a), and a regeneration column (20) which has at its head an outlet (21) for an acid gas flow, at the bottom an outlet (23) for the regenerated absorbent liquid, this outlet being connected by a conduit (26) to the inlet (10) for the absorbent liquid from the washing column (3), and at its top an inlet (22) for the charged absorbent liquid, the said inlet being connected by a conduit (24) to the corresponding outlet (11) of the washing column (3), and characterised in that it further comprises firstly a rehydration column (4), which has at its head an outlet (12) for the gases, at the top an inlet (74) for the liquids and at the bottom an outlet (15) for the liquids and an inlet (9c) for the gases, this inlet being connected to the outlet (9b) for the washing column gases, and secondly a rehydration water circuit (44) having one end connected to the outlet (15) for the liquids from the rehydration column (4) and the other end connected to the inlet (14) for the liquids from the said column (4), the said circuit (44) being associated with the cooling system (46, 2a) such that firstly the water condensed as a result of the gases to be treated being cooled passes via the outlet (7) for the liquids from the cooling system into the end of the rehydration circuit connected to the inlet (14) for the liquids from the rehydration column (4) and secondly the rehydration water from this circuit is reheated by direct (2) or indirect (35) heat exchange with the gas to be treated, the rehydration water circuit (44) also being provided with means for circulating (45) and cooling (40) the water present therein, these means being arranged between the rehydration column outlet and the cooling system, and optionally means for introducing residual water.

10. Device according to Claim 9, characterised in that the system for cooling the gas to be treated comprises an indirect heat exchanger (46) and a condensation flask (2a) having an inlet (49) and provided with an outlet (5a) for the gases and an outlet (7) for the liquids, the said outlets respectively constituting the outlets for the gases and for the liquids from the cooling system, one of the circuits of the indirect heat exchanger (46) forming part of the rehydration water circuit (44) whilst the other circuit of the said exchanger connects the conduit (8) supplying the gas to be treated to the inlet (49) of the condensation flask (2a).

11. Device according to Claim 9, characterised in that the cooling system consists of a cooling column (2) which is provided at the top with an outlet (5a) for the gases and an inlet (6) for the liquids and at the bottom the conduit (8) for supplying the gas to be treated and an outlet (7) for the liquids, the said gas and liquid outlets (5a and 7 respectively) constituting the outlets for the gases and for the liquids from the cooling system, the said cooling column (2) being mounted on the rehydration water circuit (44) via its inlet (6) and outlet (7) for the liquids.

12. Device according to Claim 11, characterised in that the cooling column (2) is provided with an indirect heat exchange apparatus (35) comprising an inlet (36) and an outlet (37) and of which the inlet (36) forms the inlet (6) for the liquids from the said cooling column, the apparatus (35) being mounted via its inlet (36) and outlet (37) on the rehydration water circuit (44).

13. Device according to Claim 11 or 12, characterised in that the cooling column (2) and rehydration column (4) form two superimposed (2, 4) and independent sections of a single column (41).

14. Device according to Claim 11 or 12, characterised in that the cooling column (2), washing column (3) and rehydration column (4) form three superimposed sections of a single column (1), ie. a lower cooling section (2), an intermediate washing section (3) and an upper rehydration section (4), such that the outlet for the gases from the section (2) and the inlet for the gases from the section (3) coincide to form a passage (5) for the gases, and such that the gas outlet of the section (3) and the gas inlet of the section (4) coincide to form a passage (9) for the gases.
